## Europäisches Patentamt
## European Patent Office
## Office européen des brevets

(19)

(11) Numéro de publication: **0 020 554**
**B1**

(12) **FASCICULE DE BREVET EUROPEEN**

(45) Date de publication du fascicule du brevet: **28.07.82**

(51) Int. Cl.³: **B 65 G 51/24**

(21) Numéro de dépôt: **79901453.5**

(22) Date de dépôt: **07.11.79**

(86) Numéro de dépôt international:
**PCT/FR79/00100**

(87) Numéro de publication internationale:
**WO 80/00954 15.05.80 Gazette 80/11**

(54) **COMMANDE ET VERROUILLAGE D'AIGUILLE PIVOTANTE POUR TRANSPORTEUR A TUBES PNEUMATIQUES.**

(30) Priorité: **08.11.78 FR 7831521**

(73) Titulaire: **LAMSON SAUNIER DUVAL**
**21, rue de la République**
**95370 Montigny les Cormeilles (FR)**

(43) Date de publication de la demande:
**07.01.81 Bulletin 81/1**

(72) Inventeur: **CARLIER, Claude**
**244, rue de Romainville**
**93100 Montreuil Cedex (FR)**

(45) Mention de la délivrance du brevet:
**28.07.82 Bulletin 82/30**

(74) Mandataire: **Lhuillier, René**
**SAUNIER DUVAL EAU CHAUDE CHAUFFAGE -**
**S.D.E.C.C. 6, rue Lavoisier**
**F-93107 Montreuil (FR)**

(84) Etats contractants désignés:
**DE GB NL**

(56) Documents cités:
**FR - A - 1 439 434**
**GB - A - 1 068 266**
**US - A - 3 367 603**
**US - A - 3 762 664**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Commande et verrouillage d'aiguille pivotante pour transporteur à tubes pneumatiques

L'invention concerne un système de commande et de verrouillage de l'aiguille pivotante d'une installation de transport à tubes pneumatiques.

Dans un transporteur pneumatique à tubes, on sait qu'il existe un certain nombre de postes d'expédition-réception, desservis par une ou plusieurs lignes, parfois associés à un central automatique. Pour limiter le coût des installations, on utilise de plus en plus, dans la mesure du possible, une seule ligne de transport sur laquelle viennent se raccorder, de place en place, des lignes de dérivation aboutissant à un poste. Au point de raccordement, il est donc nécessaire d'avoir un aiguillage en liaison continue étanche avec les sections de lignes qui s'y raccordent.

Un carter étanche enveloppe les arrivées de tube à l'intérieur duquel sont logés les mécanismes de l'aiguille proprement dite. Cependant l'étanchéité doit être assurée au moins entre l'extrémité pivotante de l'aiguille et une des lignes.

On connait par le brevet US - A - 3.367.603 un mécanisme qui assure le pivotement d'une aiguille et son verrouillage contre l'extrémité d'une ligne en lui donnant en plus de son mouvement latéral de pivotement un mouvement axial obtenu par la coopération d'une roulette de guidage appliquée contre la surface d'une came transversale, disposée au niveau des lignes et portant des échancrures au droit de chaque ligne pour le positionnement de l'aiguille. Le mécanisme moteur agit sur l'aiguille par l'intermédiare d'un bras pivotant et d'une pièce triangulaire qui pivote autour d'un axe fixe.

Le brevet US - A - 3.762.664 montre une aiguille pivotante dont le mouvement est assuré par une fourche tournant autour d'un axe fixe, l'aiguille portant en outre une roulette qui suit une came disposée transversalement à l'aiguille.

Du fait que chacun de ces mécanismes utilise un bras ou une fourche de manoeuvre pivotant autour d'un axe fixe, son débattement augmente les dimensions de l'aiguille. En outre ces mécanismes nécessitent des moteurs assez puissants et sont d'un fonctionnement bruyant.

C'est pourquoi la demanderesse a conçu un système utilisant un bras de renvoi triangulaire qui suit le mouvement du bras de commande et dont le troisième angle porte une roulette de guidage coopérant avec une came.

Ainsi sont éliminés les inconvénients propres à ces mécanismes connus puisque le mécanisme de commande selon l'invention ne nécessite qu'un moteur de faible puissance, l'angle de pivotement au niveau du point d'appui du bras de commande étant faible. De plus, la réalisation est simple, peu coûteuse et d'un encombrement réduit lui permettant une incorporation aisée dans le carter de l'aiguillage. Enfin, le nouveau système selon l'invention du fait de sa disposition à l'intérieur d'un carter étanche fonctionne sans nécessité d'assurer l'étanchéité sur la ligne de dérivation.

Selon une caractéristique essentielle de l'invention, la transmission du mouvement de pivotement du bras de commande, à son point d'appui sur l'aiguille mobile, s'effectue par l'intermédiaire d'un bras de renvoi s'articulant à la fois sur le bras de commande et sur une butée d'entrainement de l'aiguille jouant le rôle de point d'appui, le bras de renvoi portant en outre une roulette de guidage destinée à suivre les deux pans inclinés d'une même came montée fixe sur le bâti.

Selon une caractéristique particulière de l'invention, est prévue une palette pivotante tourillonnant sur l'axe de commande, et débordant jusqu'à la butée d'entrainement de l'aiguille, destinée à compenser le poids des mécanismes et de l'aiguille dans certaines conditions d'utilisation.

D'autres caractéristiques particulières et avantages de l'invention ressortiront de la r'script suivante d'une forme de réalisation, en référence aux dessins annexés qui représentent:

— figure 1: une vue en coupe verticale partielle de l'aiguille pivotante et de son mécanisme de commande.

— figure 2: une coupe vue du dessus selon la ligne AA' de la figure 1, laissant apparaître le mécanisme bras de renvoi-bras de commande.

— figure 3: une vue en coupe partielle selon B de la figure 1.

— figures 4 et 5: des coupes analogues à la figure 2 montrant l'aiguille pivotante en position intermédiaire et en position pivotée.

— figure 6: une vue en coupe verticale partielle de l'aiguille selon une variante de réalisation.

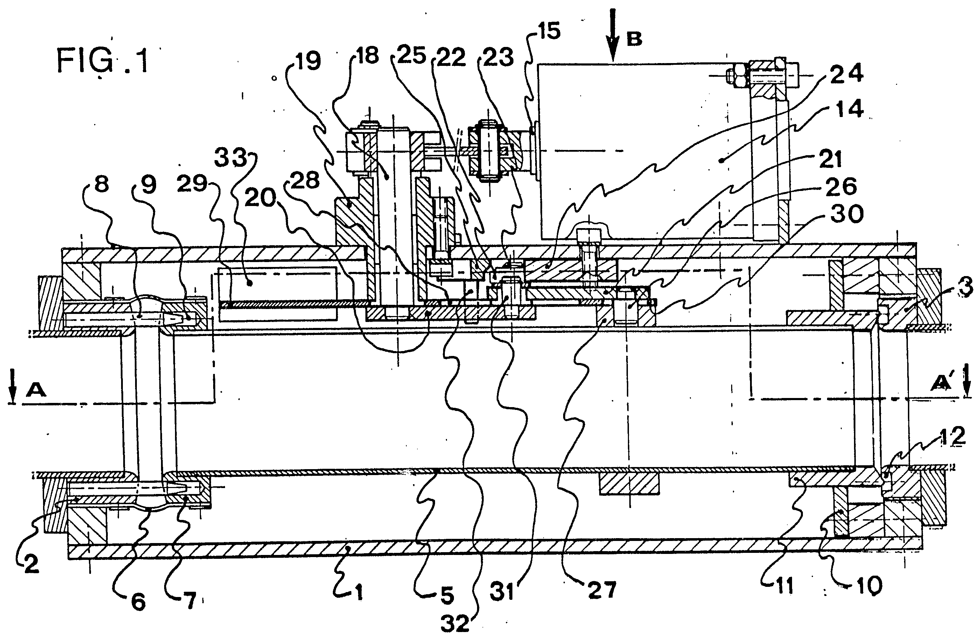

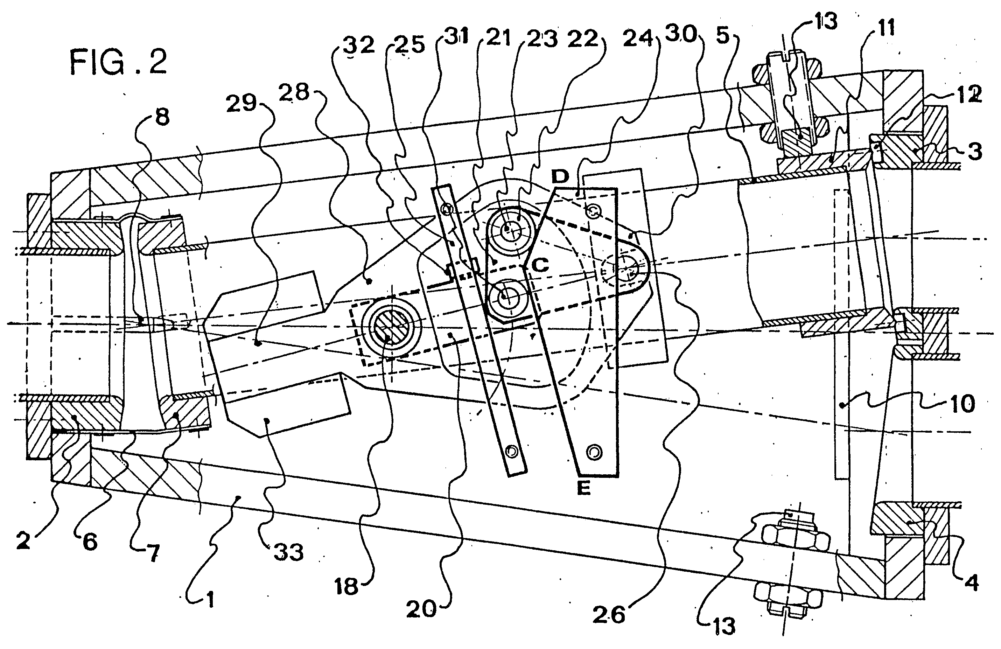

L'aiguillage représenté notamment aux figures 1 et 2 est contenu dans un carter étanche 1 qui reçoit d'un côté un embout de raccordement 2 sur la ligne principale et de l'autre côté un embout de raccordement 3 de la section opposée de la ligne principale, ainsi qu'un autre embout de dérivation 4 raccordé par exemple à un poste émetteur-récepteur du réseau. Le tube mobile 5 de l'aiguille est destiné à raccorder l'embout 2 à l'un ou l'autre des embouts 3 et 4 en pivotant autour d'un axe perpendiculaire à l'axe de la ligne principale au niveau de l'embout 2. L'articulation de l'aiguille pivotante sur l'embout est rendue étanche par un manchon souple 6 fixé à la fois sur l'embout 2 et sur une couronne 7 solidaire de l'aiguille 5. En outre deux doigts de guidage 8 diamétralement opposés prévus sur l'embout 2 pénètrent dans les évidements correspondants 9 de la couronne 7. Ils autorisent le pivotement de l'aiguille 5 dans le plan de la figure 2 et permettent un certain déplacement axial de l'aiguille 5 au cours de son mouvement de pivotement comme cela apparaîtra plus loin.

Du côté opposé de l'embout 2, l'aiguille 5 se déplace sur les guides 10 fixés au carter 1, et elle est munie d'un manchon creux 11 dont la partie débordante de profil tronconique s'applique contre le joint annulaire souple 12 monté dans une gorge prévue sur la face orientée vers l'intérieur du carter, de l'autre embout de raccordement 3 de la ligne principale, comme cela est visible sur la figure 2. Le pivotement latéral de l'aiguille 5 est limité par des butées fixes 13 également solidaires du carter 1.

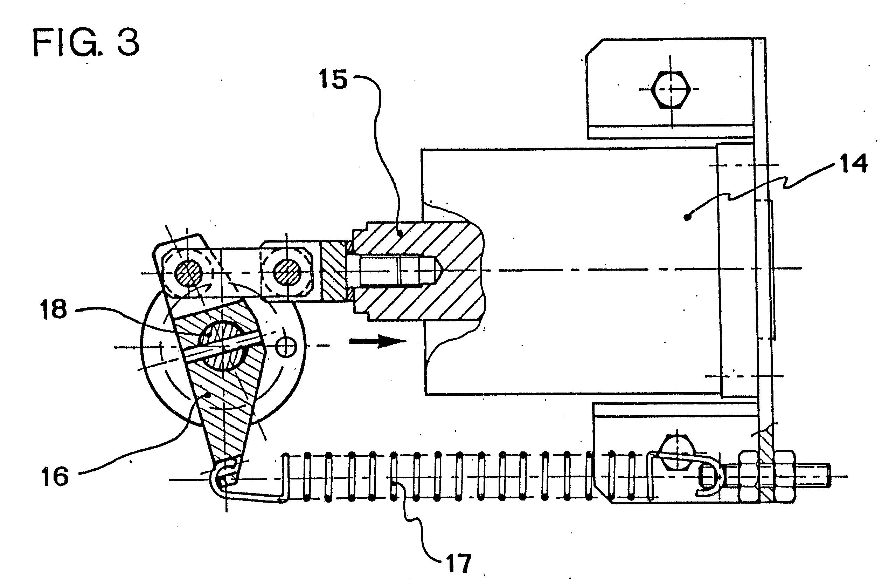

La commande de pivotement et de verrouillage de l'aiguille 5 est assurée par un électroaimant 14 monté au-dessus du carter. On voit sur les figures 1 et 3 que l'attraction du noyau mobile 15 de l'électroaimant 14 s'effectue suivant la flèche en assurant le pivotement du levier 16 à l'encontre de la force de rappel du ressort 17. Le levier 16 est solidaire d'un axe 18 qui pivote dans un puits de guidage 19 monté sur le carter, et dont l'extrémité déborde à l'intérieur du carter étanche 1. A l'extrémité inférieure de l'axe est soudé un bras de commande 20 qui s'étend à l'intérieur du carter au-dessus de l'aiguille pivotante 5. Suivant un axe 31 perpendiculaire au bras de commande et à son extrémité tourillonne un bras de renvoi 21 de forme triangulaire qui s'étend également à l'intérieur du carter au-dessus de l'aiguille pivotante. Ce bras de renvoi 21 qui s'articule par conséquent sur l'extrémité du bras de commande, porte en outre une roulette de guidage 22 à axe vertical montée au-dessus du bras de renvoi sur un pivot 23. Cette roulette 22 est en appui latéral contre une came plane 24 fixée à l'intérieur du carter 1, au-dessus du bras de renvoi. La came 24 présente deux pans inclinés CD-CE à partir d'un point d'inflexion C sensiblement disposé dans l'axe de raccordement des embouts 2 et 3. Une autre rampe de guidage 25 est également fixée à l'intérieur du carter 1 parallèlement au pan CE de la came 24 et à une distance d'elle légèrement supérieure au diamètre de la roulette 22. Le couloir ainsi délimité entre la rampe 25 et le pan CE de la came 24 sert au guidage de la roulette 22 lors du mouvement de pivotement de l'aiguille 5. L'extrémité opposée du bras de renvoi 21 porte un ergot 26 qui s'engage dans un puits de manoeuvre 27 solidaire de l'aiguille 5. Cet ergot 26 constitue donc le point d'appui sur l'aiguille mobile du mécanisme de commande du pivotement constitué du bras de commande 20 et du bras de renvoi 21. Suivant une variante de réalisation non représentée, l'extrémité opposée du bras de renvoi 21 est munie d'une bague ou d'un orifice dans lequel s'engage un ergot rapporté sur l'aiguille 5. Dans les deux cas précédents la liaison aiguille-bras de renvoi est tout-à-fait analogue.

En outre une petite butée verticale 32 rapportée sous la rampe 25 limite le débattement latéral du bras de commande 20. D'autre part, sur l'axe 18, au-dessus du bras de commande 20, tourillonne une palette pivotante 28 jouant le rôle de contre-poids dont une extrémité 29, du côté du manchon 2, porte un poids 33, et dont l'extrémité opposé a un profil en forme de fourche 30 qui enveloppe l'ergot 26. On remarque à la figure 1 que cette fourche encadre l'ergot 26 au dessous du bras de renvoi 21. La partie centrale de la palette 28, comme on le voit à la figure 2, est largement évidée pour ne pas entraver le débattement de l'axe 31 constituant l'articulation du bras de renvoi 21 sur le bras de commande 20. La palette ainsi montée autour de l'axe 18, en suivant le mouvement de l'ergot 26 -donc de l'aiguille 5, qui entraine ladite palette par les bords de la fourche 30.

Le fonctionnement de l'aiguille s'effectue de la manière suivante. La figure 2 montre l'aiguille 5 en position dite "de repos" pour laquelle la liaison est assurée de façon étanche entre les deux sections opposées de la ligne principale. Dans ce cas l'électroaimant 14 n'étant pas excité, la force de rappel du ressort 17 (figure 3) s'exerce sur l'extrémité du levier 16 pour maintenir l'axe 18 et le bras de commande 20 dans la position de la figure 2. L'aiguille 5 étant appliquée contre la butée 13, le bras de commande 20 est également appliqué contre la butée 32, par conséquent le point d'appui qui constitue l'ergot 26 est aligné avec le bras de commande 20. Les trois points alignés: axe 18 — axe 31 — ergot 26, représentent la distance maximum possible entre l'axe 18 et l'ergot 26, c'est-à-dire que le bras de commande 20 et le bras de renvoi 21 exercent un effort sur l'ergot 26 dans le sens du maintien axial de l'aiguille 5 dans la position verrouillée pour laquelle le manchon 11 écrase le joint annulaire 12 et assure l'étanchéité entre l'aiguille pivotante 5 et l'embout 3. On notera que l'ergot 26 est bloqué latéralement puisque l'aiguille 5 est en appui sur la butée 13 et que le bras de commande 20 est également bloqué latéralement par sa butée 32. La roulette 22 occupe donc la position représentée en appui contre le pan CD de la came 24.

Quand l'aiguille 5 doit pivoter vers la position déviée en face de l'embout 4, il faut donc dans un premier temps que son manchon d'extrémité 11 se dégage axialement du joint annulaire 12, avant le début du mouvement de pivotement proprement dit.

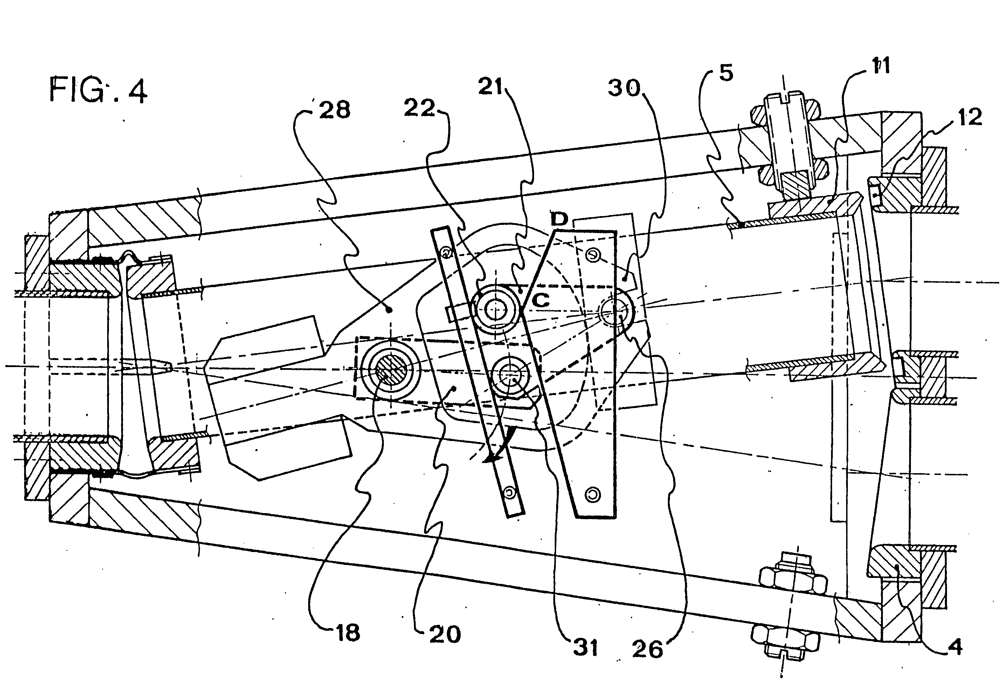

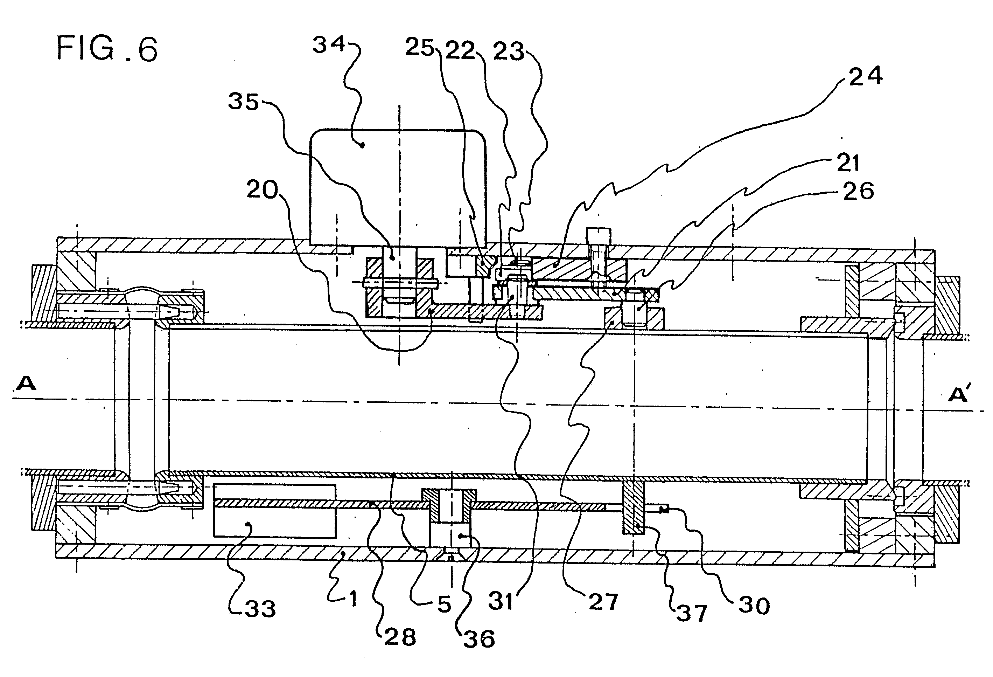

Ce premier temps est illustré à la figure 4. Dès l'excitation de l'électroaimant 14, l'attraction du noyau mobile 15 à l'encontre de la force du ressort 17 (figure 3) amorce le mouvement de pivotement de l'axe 18 et du bras de commande 20 dans le sens indiqué par la flèche. L'axe 31 entraine dans son mouvement de pivotement le bras de renvoi 21 dont la roulette 22 suit le pan incliné DC de la came 24.

L'ergot 26 n'étant de ce fait plus aligné avec le bras de commande (ligne brisée 18—31—26) est nécessairement plus proche de l'axe 18. Par conséquent, quand la roulette 22 a atteint sensiblement le point C, le bras de renvoi 21 ayant pivoté a provoqué le retrait de l'ergot 26 de quelques millimètres en direction de l'articulation de l'aiguille 5, c'est-à-dire que l'extrémité de celle-ci s'est dégagée d'une distance équivalente du joint annulaire 12. L'aiguille peut maintenant pivoter. La palette 28 suit le mouvement de l'ergot 26 grâce à la fourche 30, et son contrepoids équilibre ainsi la masse en mouvement comme indiqué plus loin.

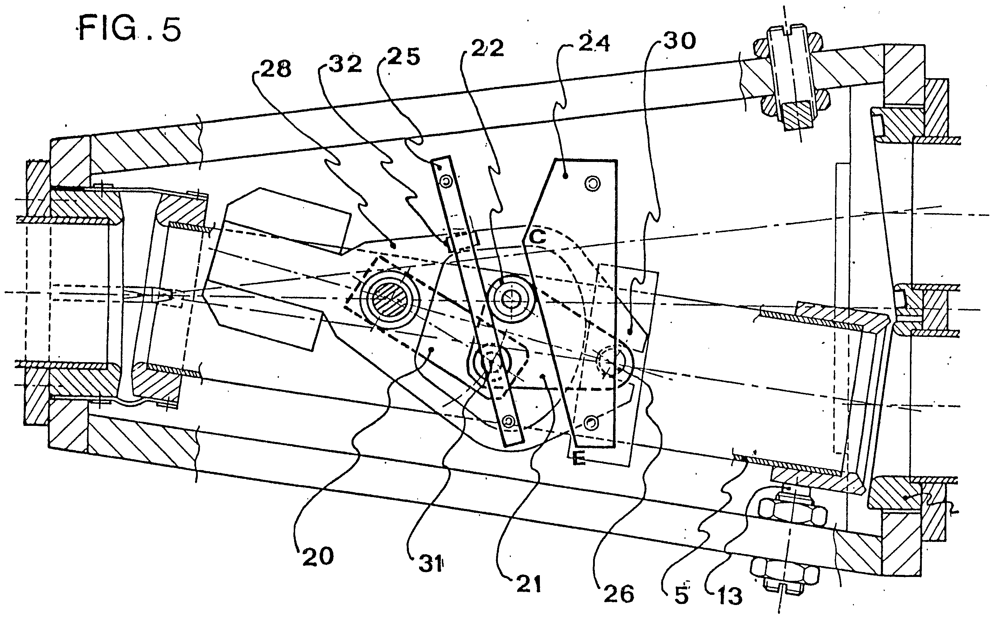

Le second temps de pivotement est illustré à la figure 5. A partir de la position indiqué ci-dessus (la roulette 22 au point C), se poursuit le mouvement de pivotement du bras de commande 20. A son extrémité l'axe 31 sur lequel tourillonne le bras de renvoi 21, effectue un mouvement circulaire comme indiqué. La roulette 22 par contre est guidée dans le couloir délimité par la rampe 25 et le pan CE de la came 24. La combinaison du mouvement de pivotement de l'axe 31 et de déplacement rectiligne de la roulette 22 assure la translation et le pivotement simultané du bras de renvoi 21 qui se traduit par un déplacement de l'ergot 26 et par conséquent de l'aiguille 5 jusqu'à ce qu'elle vienne en appui contre la butée 13. L'aiguille est positionnée en face de l'embout 4 et est prête à assurer le passage d'une cartouche provenant d'une ligne de dérivation ou devant y accéder. L'étanchéité de l'aiguille 5 sur l'embout 4 n'est pas assurée à ce niveau. Le passage d'air entre l'embout 4 et l'intérieur du carter est sans incidence sur le fonctionnement de l'installation. Cette position déviée de l'aiguille est dite position de travail que correspond à l'excitation de l'électroaimant. Dès que celle-ci est interrompue l'aiguille revient à sa position suivant un mouvement inverse sous l'action du ressort 17 qui provoque le retour du bras de commande 20 jusqu'à sa butée 32. Au cours de ces déplacements de l'aiguille 5, la palette pivotante 28 dont la fourche 30 est en permanence engagée sur l'ergot 26 suit le mouvement pivotant de l'aiguille. On a vu que son extrémité 29 portait un contrepoids 33. La palette a pour fonction de compenser le poids de l'aiguille et des mécanismes de commande qui lui sont associés dans toutes les positions de fonctionnement de l'aiguillage.

Si l'aiguillage fonctionne à plat dans le plan de la figure 2, le déplacement horizontal de l'aiguille 5 sur les guides 10 est assuré sans difficultés par l'électroaimant ou son ressort de rappel; la palette pivotante 28 ne joue ici aucun rôle. Si par contre l'aiguillage fonctionne dans un plan vertical, ni la force de l'électroaimant, ni celle de son ressort de rappel ne sont suffisants pour déplacer le bras de commande, le bras de renvoi et l'aiguille d'une position basse à une position haute. La palette 28 et son contrepoids 33, qui pivote autour de l'axe horizontal 18 et accroche l'aiguille pivotante 5 par l'ergot 26 équilibre les masses en mouvement sur l'axe 18. Ce système complémentaire d'équilibrage, associé aux mécanismes de commande et de verrouillage de l'aiguille, est extrêmement intéressant car il permet l'implantation de l'aiguille dans n'importe quelle position, pour tout sens de circulation de la cartouche, déplacée au vide ou en pression. L'aiguille pivotante est donc d'un emploi très souple et se prête à toutes installations.

La figure 6 montre des variantes de réalisation.

Une première variante représentée consiste à disposer un électroaimant rotatif 34 à la place de l'électroaimant classique représenté aux figures 1 et 3. Cet électroaimant rotatif se place directement sur le carter et son axe 35 se substitue à l'axe 18 des autres réalisations. Le bras de commande 20 est claveté sur l'axe 35. Cet électroaimant rotatif possède son propre ressort de rappel. Il évite ainsi le montage du levier pivotant (figure 3) et des dispositifs annexes et représente de ce fait une amélioration intéressante sur le plan de la simplification et du prix de revient. Comme par construction, la course du bras de commande 20 est faible, un électroaimant rotatif de faible puissance et de faible course s'adapte donc facilement.

La seconde variante représentée consiste à monter la palette pivotante 28, non pas au-dessus de l'aiguille c'est-à-dire sur l'axe 18 du bras de commande 20, mais de l'autre côté de l'aiguille 5. La palette est cette fois montée sur un pivot 36 rapporté à l'intérieur du carter 1. Du côté opposé au contrepoids 33 son extrémité en forme de fourche 30 enveloppe un ergot 37 analogue à l'ergot 26, fixé à la partie inférieure de l'aiguille. La palette équilibre de la même manière les masses en mouvement; sa position particulière du côté opposé aux mécanismes rend la fabrication de l'aiguille plus facile, et permet justement de disposer de davantage de place, à la partie supérieure, pour les mécanismes proprement dits de commande et de verrouillage.

Bien entendu, l'invention ne se limite pas aux descriptions précédentes d'exemples particuliers de réalisation mais en englobe au contraire toutes les autres variantes constructives.

## Revendications

1. Aiguillage pour transporteur à tubes pneumatiques comportant dans un carter étanche une aiguille pivotante (5) assurant la jonction entre une première section de ligne principale du côté de son axe de pivotement et une seconde section de ligne principale ou une section de ligne de dérivation du côté opposé, la jonction étant assurée de façon étanche contre la seconde section de ligne principale par un léger déplacement axial de l'aiguille (5) dans le sens de l'écrasement d'un joint annulaire (12) disposé au bout de cette section, ce déplacement axial étant obtenu par la coopération d'une roulette de guidage (22) appliquée contre la surface d'une came fixe (24) disposée transversalement à l'axe de l'aiguille, et la transmission de mouvement entre un mécanisme moteur (14) et un point d'appui (26) solidaire de l'aiguille pivotante étant assurée par un bras de commande pivotant (20) agissant sur un bras de renvoi (21) de forme sensiblement triangulaire, dont un premier angle accroche ledit point d'appui, caractérisé par le fait que le bras de renvoi (21) pivote autour d'un axe (31) porté par l'extrémité du bras de commande (20) sur lequel il tourillonne selon un autre de ses angles et suit ainsi totalement le mouvement de pivotement dudit bras, et qu'il porte, dans la zone du troisième angle, la roulette de guidage (22) appliquée contre au moins une came fixe (24) servant à orienter ledit bras de renvoi durant le pivotement du bras de commande.

2. Aiguillage selon la revendication 1 caractérisé par le fait que le bras de commande pivotant (20) disposé à l'intérieur du carter au-dessus du plan de pivotement de l'aiguille (5) est fixé à un axe de rotation (18) traversant le carter et manoeuvré par un électro-aimant moteur (14) à faible course.

3. Aiguillage selon la revendication 2 caractérisé par le fait que l'électro-aimant moteur est un électro-aimant rotatif dont l'axe est confondu avec l'axe (18) du bras de commande (20).

4. Aiguillage selon la revendication 1 caractérisé par le fait que le point d'appui du bras de renvoi (21) sur l'aiguille pivotante (5) est un ergot (26) fixé à proximité d'un autre angle du bras de renvoi et pénétrant dans un puits de manoeuvre (27) rapporté sur l'aiguille.

5. Aiguillage selon la revendication 1 caractérisé par le fait que le point d'appui du bras de renvoi (21) sur l'aiguille pivotante (5) est une bague ou un orifice prévu à proximité d'un autre angle du bras de renvoi dans lequel pénètre un ergot rapporté sur l'aiguille.

6. Aiguillage selon la revendication 1 caractérisé par le fait que la roulette (22) est montée sur un pivot (23) localisé à proximité du troisième angle du bras de renvoi (21), à un niveau distinct de celui dudit bras de renvoi.

7. Aiguillage selon la revendication 1 caractérisé par le fait que la came (24) fixée à l'intérieur du carter (1) de l'aiguillage, présente au niveau de la roulette (22) une face verticale à deux pans CD et CE inclinés à partir d'un point d'inflexion C, sensiblement disposé dans l'axe de raccordement des sections de ligne principale.

8. Aiguillage selon la revendication 7 caractérisé par le fait qu'une rampe de guidage (25) est également fixée à l'intérieur du carter (1) parallèlement au pan CE de la came (24) et à une distance d'elle légèrement supérieure au diamètre de la roulette (22).

9. Aiguillage selon la revendication caractérisé par le fait qu'une butée (32) rapportée sur la rampe (25) limite le débattement latéral du bras de commande.

10. Aiguillage selon la revendication 1 caractérisé par le fait qu'un dispositif à contrepoids, destiné à compenser le poids des mécanismes et de l'aiguille dans certaines conditions d'implantation de l'aiguillage, est monté pivotant et est manoeuvré par l'aiguille.

11. Aiguillage selon la revendication 10, caractérisé par le fait que le dispositif à contrepoids est constitué d'une palette pivotante (28) portant une masse (33), tourillonnant sur l'axe (18) du bras de commande (20) et débordant jusqu'à l'ergot (26) d'entrainement de l'aiguille.

12. Aiguillage selon la revendication 11 caractérisé par le fait que l'extrémité de la palette est profilée en forme de fourche (30) pour encadrer l'ergot au-dessous du bras de renvoi (21).

13. Aiguillage selon la revendication 10 caractérisé par le fait que le dispositif à contrepoids est constitué d'une palette pivotante (28) portant une masse (33), tourillonnant sur un pivot (36) rapporté à l'intérieur du carter (1), et débordant jusqu'à un ergot (37) solidaire de l'aiguille.

**Patentansprüche**

1. Verzweigung für pneumatische Rohrtransportvorrichtungen, mit einer in einem dichten Gehäuse angeordneten schwenkbaren Weiche (5), die die Verbindung zwischen einem ersten Hauptleitungsabschnitt auf der Seite ihrer Schwenkachse und einem zweiten Hauptleitungsabschnitt auf der gegenüberliegenden Seite herstellt, wobei die Verbindung am zweiten Hauptleitungsabschnitt durch eine geringfügige axiale Verschiebung der Weiche (5) in Richtung der Zusammendrückung einer am Ende dieses Abschnitts angeordneten Ringdichtung abgedichtet erfolgt, wobei die axiale Schiebung durch das Einwirken einer Führungsrolle (22) erfolgt, die gegen die quer zur Achse der Weiche angeordnete Oberfläche eines feststehenden Nockens (24) gedrückt wird, und wobei die Bewegungsübertragung zwischen einem Antriebsmechanismus (14) und einem an der schwenkbaren Weiche festen Anlagepunkt (26) durch einem Schwenksteuerhebel (20) erfolgt, der auf einem im wesentlichen dreieckigen Stellhebel (21) wirkt, von dem ein erster Winkel den Anlagepunkt aufnimmt, dadurch gekennzeichnet, dass der Stellhebel (21) um eine Achse (31) schwenkbar ist, die von dem Ende des Steuerhebels (20) getragen wird, auf dem er sich gemäss einem weiteren seiner Winkel dreht und somit der Schwenkbewegung des Arms völlig folgt, und dass er in der Zone des dritten Winkels die Führungsrolle (22) trägt, die an wenigstens einem feststehenden Nocken (24) anliegt, der zur Ausrichtung des Stellhebels während der Schwenkung des Steuerhebels dient.

2. Verzweigung nach Anspruch 1, dadurch gekennzeichnet, dass der schwenkbare Steuerarm (20) im Gehäuse über der Schwenkebene der Weiche (5) angeordnet, an einer das Gehäuse durchquerenden Drehachse (18) festgelegt und durch einen Elektromagnet-Motor (14) mit geringem Hub betätigbar ist.

3. Verzweigung nach Anspruch 2, dadurch gekennzeichnet, dass der Elektromagnet-Motor ein rotierender Elektromagnet ist, dessen Achse mit der Achse (18) des Steuerhebels (20) zusammenfällt.

4. Verzweigung nach Anspruch 1, dadurch gekennzeichnet, dass der Anlagepunkt des Stellhebels (21) an der schwenkbaren Weiche (5) ein Ansatz (26) ist, der in Nähe eines weiteren Winkels des Stellarms befestigt ist und in eine an der Weiche angebrachte Betätigungsbohrung (27) eindringt.

5. Verzweigung nach Anspruch 1, dadurch gekennzeichnet, dass der Anlagepunkt des Stellhebels (21) an der schwenkbaren Weiche (5) ein in Nähe eines weiteren Winkels des Stellhebels angeordneter Ring oder eine Öffnung ist, in die der an der Weiche angebrachte Ansatz eindringt.

6. Werzweigung nach Anspruch 1, dadurch gekennzeichnet, dass die Rolle (22) an einem Zapfen (23) gelagert ist, der in bestimmter Höhe gegenüber derjenigen des Stellhebels in Nähe des dritten Winkels des Stellhebels (21) festgelegt ist.

7. Verzweigung nach Anspruch 1, dadurch gekennzeichnet, dass der innerhalb des Gehäuses (1) der Verzweigung befestigte Nocken (24) in Nähe der Rolle (22) eine senkrechte Fläche aus zwei Abflachungen CD und CE aufweist, die ausgehend von einem Knickpunkt C geneigt sind, der etwa in der Verbindungsachse der Hauptleitungsabschnitte angeordnet ist.

8. Verzweigung nach Anspruch 7, dadurch gekennzeichnet, dass innerhalb des Gehäuses (1) auch eine Führungsrampe (25) parallel zur Abflachung CE des Nockens (24) und in einem Abstand hiervon befestigt ist, der geringfügig über dem Durchmesser der Rolle (22) liegt.

9. Verzweigung nach Anspruch 8, dadurch gekennzeichnet, dass eine an der Rampe (25) angebrachter Anschlag (32) die seitliche Auslenkung des Steuerhebels begrenzt.

10. Verzweigung nach Anspruch 1, dadurch gekennzeichnet, dass eine Vorrichtung mit Gegengewicht, das das Gewicht der Mechanismen und der Weiche unter gewissen Einsetzbedingungen der Weiche ausgeleicht, schwenkbar gelagert und auf der Weiche drehbar ist.

11. Verzweigung nach Anspruch 10, dadurch gekennzeichnet, dass die Vorrichtung mit Gegengewicht durch eine eine Masse tragende schwenkbare Platte (28) gebildet ist, die auf der Achse (18) des Steuerhebels (20) drehbar ist und bis zum Ansatz (26) für den Antrieb der Weiche übersteht.

12. Verzweigung nach Anspruch 11, dadurch gekennzeichnet, dass das Ende der Platte in Form einer Gabel (30) profiliert ist und den Ansatz unterhalb des Stellhebels (21) umfasst.

13. Verzweigung nach Anspruch 10, dadurch gekennzeichnet, dass die Vorrichtung mit Gegengewicht aus einer schwenkbaren Platte (28) besteht, die eine an einem innerhalb des Gehäuses (1) angebrachten Zapfen (36) drehbare Masse (33) trägt und bis zu einem an der Weiche befestigten Ansatz (37) übersteht.

## Claims

1. Switching device for a pneumatic tube-transporter comprising, in a leaktight casing, a pivoting switch (5) providing the join between a first main-line section on the same side as its pivoting axis and a second main-line section or a branch-line section on the opposite side, the join being provided in a leaktight manner, against the second main-line section, by a slight axial displacement of the switch (5) in the direction of compression of an annular gasket (12) arranged at the end of this section, this axial displacement being obtained by the cooperation of a guide roller (22) applied against the surface of a fixed cam (24) arranged transversely to the axis of the switch, and the transmission of movement between a drive mechanism (14) and a point of support (26), firmly fixed to the pivoting switch, being provided by a pivoting control arm (20) acting on a return arm (21) of essentially triangular shape, of which a first corner hooks onto the said point of support, characterised in that the return arms (21) pivots around an axle (31) carried by the end of the control arm (20) on which it swivels by another of its corners, and thus totally follows the pivoting movement of the said arm, and in that it carries, in the region of the third corner, the guide roller (22) applied against at least one fixed cam (24) serving to orientate the said return arm during the pivoting of the control arm.

2. Switching device according to Claim 1, characterised in that the pivoting control arm (20), arranged inside the casing above the pivoting plane of the switch (5), is fixed to a rotation axle (18) passing through the casing and operated by a drive electromagnet (14) with a short stroke.

3. Switching device according to Claim 2, characterised in that the drive electromagnet is a rotary electromagnet, the axle of which coincides with the axle (18) of the control arm (20).

4. Switching device according to Claim 1, characterised in that the point of support of the return arm (21) on the pivoting switch (5) is a pin (26) fixed in the vicinity of another corner of the return arm and penetrating into an operating well (27) attached to the switch.

5. Switching device according to Claim 1, characterised in that the point of support of the return arm (21) on the pivoting switch (5) is a ring or an orifice provided in the vicinity of another corner of the return arm, into which a pin attached to the switch penetrates.

6. Switching device according to Claim 1, characterised in that the roller (22) is mounted on a pivot (23) located in the vicinity of the third corner of the return arm (21), at a different level from that of the said return arm.

7. Switching device according to Claim 1, characterised in that the cam (24), fixed inside the casing (1) of the switching device, possesses, in the region of the roller (22), a vertical face with two sides, CD and CE, inclined away from a point of inflection C, located essentially along the axis of connection of the main-line sections.

8. Switching device according to Claim 7, characterised in that a guide ramp (25) is also fixed inside the casing (1), parallel to the side CE of the cam (24) and at a distance from the latter which is slightly greater than the diameter of the roller (22).

9. Switching device according to Claim 8, characterised in that a stop (32), attached to the ramp (25), limits the lateral movement of the control arm.

10. Switching device according to Claim 1, characterised in that a counterweight device, the purpose of which is to compensate the weight of the mechanisms and of the switch under certain conditions of layout of the switching device, is mounted so as to pivot and is operated by the switch.

11. Switching device according to Claim 10, characterised in that the counterweight device consists of a pivoting plate (28) carrying a mass (33), swivelling on the axle (18) of the control arm (20) and projecting as far as the pin (20) for driving the switch.

12. Switching device according to Claim 11, characterised in that the end of the plate is shaped into a fork (30) for enclosing the pin below the return arm (21).

13. Switching device according to Claim 10, characterised in that the counterweight device consists of a pivoting plate (28) carrying a mass (33), swivelling on a pivot (36) attached to the inside of the housing (1), and projecting as far 'as a pin (37) firmly fixed to the switch.

FIG.1

FIG. 2

# FIG. 3

FIG. 4

FIG.6

0020554

FIG.5

28  32  25  22  24  30

20  31  21  26  5  13

0020 554